# EUROPEAN PATENT APPLICATION

(11) **EP 1 211 134 A2**
(43) Date of publication of application: **05.06.2002**
(21) Application number: 01204667.8
(22) Date of filing: 30.11.2001
(51) Int. Cl.: B60R 9/10

(54) **Load carrier**

(30) Priority: 30.11.2000 NL 1016761
(71) Applicant: Jonk, Thomas Hendricus Petrus, 1132 JC Volendam (NL)
(72) Inventor: Jonk, Thomas Hendricus Petrus, 1132 JC Volendam (NL)
(74) Representative: Brookhuis, Hendrik Jan Arnold

(57) **Abstract**

A load carrier adapted for mounting on the rear side of a motor vehicle. The load carrier comprises a load accommodation construction for accommodating a load, in particular for one or more bicycles, an intermediate construction, and an attachment device, the attachment device being designed for securing the intermediate construction to the rear side of the vehicle.

The load accommodation construction is connected to the intermediate construction by way of a pivot assembly, which pivot assembly forms a vertical pivot axis, all the above in such a way that the load accommodation construction is movable between a transport position and a clear access position.

In the transport position the load accommodation construction is situated behind the vehicle, and access to the rear side of the vehicle is consequently impeded or blocked.

In the clear access position, the load accommodation construction is situated laterally beside the vehicle - in the vicinity of the rear side of the vehicle - in an orientation turned approximately a quarter turn relative to the transport position.

The intermediate construction permits a translation of the pivot along the rear side of the motor vehicle.

## Description

The present invention relates to an assembly of an intermediate construction that is designed for having attached to it a load accommodation construction for a load, in particular one or more bicycles, and an attachment device for securing the intermediate construction to the rear side of a motor vehicle, according to the preamble of claim 1. A load carrier provided with such an assembly is known, for example from US 3,891,132, US 5,094,373, US 5,544,799 and US 5,454,496.

The intermediate construction of these known load carriers is composed of a stationary arm that can be fixed to the vehicle and a swivelling arm that is attached by way of the pivot assembly to the stationary arm in such a way that it can swivel. The stationary arm in this case extends along the rear side of the vehicle, in particular parallel to the rear bumper.

In the case of these known load carriers a load accommodation construction can swivel between a transport position and a clear access position. In the transport position the load accommodation construction, and the load that it is carrying, is situated behind the vehicle. This is necessary when the vehicle is being driven, but has the disadvantage that in that transport position access to the rear side of the vehicle is impeded or even totally blocked by the load and/or the load accommodation construction.

In the case of the known load carriers the laden or unladen load accommodation construction can be taken into the clear access position, in which the load accommodation construction is situated more or less laterally beside the vehicle - in the vicinity of the rear side of the vehicle - in an orientation turned approximately a quarter turn relative to the transport position. There is therefore clear access to the rear side of the vehicle, and the tailgate, the rear door(s) or the boot lid, for example, can be opened.

Other load carriers with the possibility of providing clear access to the rear side of the vehicle are described in US 6,085,954 and US 5,664,717.

A disadvantage of the known load carriers is that a large amount of space is needed behind the vehicle in question to take the (laden) load accommodation construction into the clear access position. At crowded locations, for example, such as cycling events, there is then a considerable risk of someone else parking his vehicle so close behind the vehicle with the load carrier that there is insufficient space for the swivelling movement. There is also a risk of the load or load accommodation construction hitting the vehicle parked behind it during the swivelling movement, which can lead to damage to that vehicle and the load. It will be clear that the same problems also play a role if little space is available behind the vehicle in a garage.

The object of the present invention is to provide an assembly of an intermediate construction that is designed for having attached to it a load accommodation construction for a load, in particular one or more bicycles, and an attachment device for securing the intermediate construction to the rear side of a motor vehicle, which assembly can offer clear access to the rear side of the vehicle even if relatively little space is available behind the vehicle with the load carrier.

The present invention achieves this object by providing an assembly according to the preamble of claim 1, which is characterized in that the intermediate construction permits a translation of the pivot assembly along the rear side of the motor vehicle. If the vehicle with a load accommodation construction has been parked in the transport position, a translation of the load accommodation construction in a substantially transverse direction to the longitudinal axis of the vehicle can first be carried out, by translation of the pivot assembly more or less parallel to the rear side of the vehicle. In the second instance, the swivelling movement of the load accommodation construction about the pivot axis can then be carried out, approximately through a quarter turn, so that the load accommodation construction and the load, if present, goes more or less beside the vehicle, in such a way that the rear side of the vehicle is accessible, for example in order to open the tailgate. The clear space required behind the vehicle is considerably less in the case of the solution according to the invention than in the case of the known solutions mentioned earlier.

In a possible embodiment, the intermediate construction comprises a telescopic arm, having a stationary arm part which can be fixed by way of the attachment device to the motor vehicle, and having a telescopically movable arm part, which may, if desired, be composed of several elements and is telescopically guided relative to the stationary arm part, and which is movable back and forth substantially parallel to the rear side of the vehicle, the pivot assembly being fitted on the telescopic arm part.

In a preferred embodiment, the intermediate construction comprises an elongated rail, and the attachment device is designed to fix the rail to the vehicle, in such a way that the rail extends along the rear side of the motor vehicle until near one or both of the rear corners of the motor vehicle, the intermediate construction further comprising a sliding member, which is fitted in such a way that it can slide back and forth on the rail. The load accommodation construction in this case can be fitted detachably or otherwise on the sliding member by way of the pivot assembly. In a variant, provision can be made for the load accommodation construction to be such that it can be folded up or, for example, can be swung up about a horizontal pivot axis relative to the sliding member. Provision can also be made for the pivot assembly to be fitted in an easily detachable manner on the sliding member, and in a further variant provision can be made for the sliding member to be easily detachable from the rail. These solutions make it possible to leave the rail or the entire load carrier there on the vehicle during the period that no use is being made of the load carrier.

It is preferable to provide for the pivot assembly to be disposed in a manner staggered laterally outwards relative to the guide means of the sliding member, preferably in such a way that the pivot axis is situated beyond the side of the vehicle, while the adjacent end of the rail is situated inwards relative to the corner of the vehicle. This ensures that the rail does not constitute a dangerous or awkward projection on the vehicle, in particular if the load carrier is not loaded.

In a possible embodiment, provision is made for the vehicle to have a vehicle towing ball, and for the attachment device to be designed for securing the intermediate construction to the vehicle towing ball, and further for an additional towing ball to be fitted on the intermediate construction, for example on the sliding member, preferably at substantially the same height as the vehicle towing ball. This solution makes it possible to couple a trailer or the like to the motor vehicle without having to remove the intermediate construction from the vehicle.

A load accommodation construction can advantageously be fitted on the additional towing ball. In a further variant, provision can be made for the additional towing ball to form part of the pivot assembly. The pivot assembly can further advantageously be partly or fully exchangeable for an additional towing ball.

In a preferred embodiment, the intermediate construction forms a curved translation path for the pivot assembly, which path is situated in a substantially horizontal plane.

The present invention also relates to a load carrier designed for mounting on the rear side of a motor vehicle. The load carrier comprises a load accommodation construction for the accommodation of a load, in particular for one or more bicycles, and an assembly of an intermediate construction and an attachment device according to one or more of claims 1 - 11. The load accommodation construction can be connected to the intermediate construction in a detachable or fixed manner.

The present invention also relates to a load carrier according to claim 13, in which the possibility of connecting a trailer or the like to the additional towing ball without removing the intermediate construction is provided. This embodiment is advantageous, for example, in combination with the intermediate construction as disclosed in US 5,664,717, in the case of which the additional towing ball can then be used to fix an already known load accommodation construction, which is designed for direct attachment to the vehicle towing ball, to the intermediate construction.

The invention further relates to a load carrier according to claim 14, in which the required electrical connection for lighting on the rear side of the load carrier can easily be achieved, preferably automatically.

The invention and also further embodiments and advantages of the invention will be explained in greater detail below with reference to the drawing, in which:
Fig. 1 shows in top view the rear part of a motor vehicle provided with an exemplary embodiment of the load carrier according to the invention, in the transport position;
Fig. 2 shows the view of Figure 1 in the clear access position of the load accommodation construction;
Fig. 3 shows a perspective view of the rear side of a vehicle and a preferred embodiment of the load carrier according to the invention.

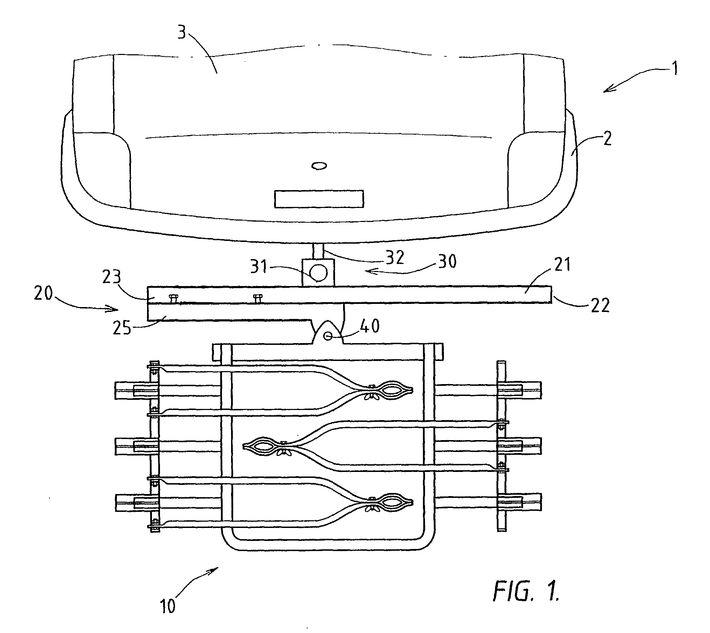

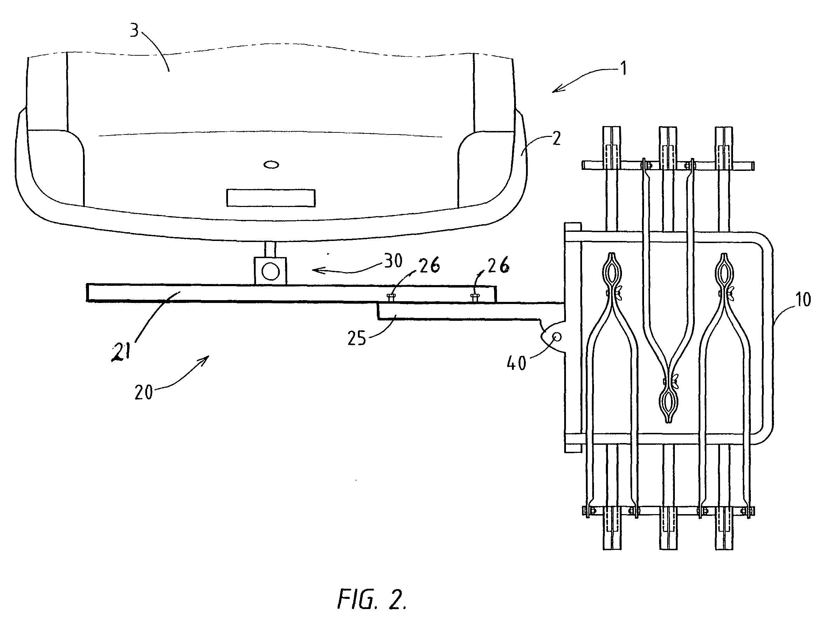

In Figures 1 and 2 the rear part of a motor vehicle 1, shown by way of example, can be seen, which motor vehicle has a rear bumper 2, here extending around the corners on the rear side of the vehicle, and has a tailgate 3 fitted on the body in such a way that it can swing about a hinge along the top side.

A load carrier according to the invention is fitted on the rear side of the vehicle 1.

The load carrier comprises a load accommodation construction 10, which is adapted to a particular type of load, in this example a construction 10 on which several bicycles can be placed. It will be clear that the construction 10 can also be designed in a totally different way, for example as shown in the publications mentioned earlier or as in EP 0,666,197.

The load carrier further comprises an intermediate construction 20, to be explained in greater detail below, and an attachment device 30, which is designed for securing the intermediate construction 20 on the rear side of the vehicle.

In the example shown, the attachment device 30 is designed for rigid attachment of the intermediate construction 20 to the towing hook 32, which projects from the centre of the rear of the vehicle and is provided with a towing ball 31.

The attachment device 30 is designed in such a way that the intermediate construction 20 can be fixed immovably on the towing hook 32 in a play-free manner, for example as shown in EP 0,666,197 or EP 0,943,495. If desired, provision may be made for an additional clamping construction, which can be fixed with one or more bolts, and clamps around the bar of the towing hook 32 below the towing ball 31.

The load accommodation construction 10 is connected by way of a pivot assembly to the intermediate construction 20, which pivot assembly forms a vertical pivot axis 40.

In Figure 1 the load accommodation construction 10 is situated in a transport position, in other words behind the vehicle 1, with the bicycles (not shown) being disposed transversely behind the vehicle. In this position the vehicle can be driven. In the transport position the load accommodation construction 10 blocks the access to the rear side of the vehicle, certainly if one or more bicycles have been placed on it. In particular, the tailgate 3 cannot be opened.

In Figure 2 the load accommodation construction 10 has been moved to the clear access position, in which position the load accommodation construction 10 is situated laterally beside the vehicle 1 - in the vicinity of the rear side of the vehicle - in an orientation turned approximately a quarter turn relative to the transport position.

It is already clear from a comparison of Figures 1 and 2 that the intermediate construction 20 permits a translation of the pivot assembly with pivot axis 40 - and consequently of the load accommodation construction 10 - transversely to the longitudinal axis of the vehicle, along the rear side of the motor vehicle.

The intermediate construction 20 in this example comprises an elongated stable rail 21, preferably made of steel, which can be fixed firmly by means of the attachment device 30 to the towing hook 32. In this case the rail 21 runs substantially parallel to the rear bumper 2, one end 22 of the rail 21 being situated near a corner of the rear side of the vehicle. The end 22 concerned is situated a distance staggered inwards relative to the side of the vehicle. Viewed from the attachment 30 towards the other end 23, the rail 21 is shorter.

In the embodiment shown, the rail 21 is a straight rail, but provision can also be made for the rail 21 to form a curved translation path for sliding member 25.

The intermediate construction 20 further comprises a sliding member 25, which is mounted on the rail 21 in such a way that it can be slid back and forth by way of guide means.

The load accommodation construction 10 is fitted on the sliding member 25 by way of the pivot assembly with pivot axis 40.

It is not shown in Figures 1 and 2 that the load carrier can be provided with locking means, for example a manually operable locking pin, for locking the position of the sliding member 25 relative to the rail 21 in the transport position of the load accommodation construction 10. The locking means then serve to prevent undesired movement of the load accommodation construction 10 during driving, and the locking means can also serve to eliminate any play that there might be between the rail 21 and the guide means, with the result that undesired vibrations are prevented.

The guide means can comprise one or more roller elements 26 fitted on the sliding member 25, for providing a roller bearing relative to the rail 21. The position of one or more of the roller elements 26 is preferably adjustable for play-free guidance of the sliding member 25 relative to the rail 21, for example with an eccentric mechanism.

In another embodiment, the sliding element 25 can be mounted on sliding bearings, for example with plastic sliding parts.

The pivot axis 40 is disposed in a position staggered laterally outwards relative to the guide means 26 of the sliding member 25, in such a way that the pivot axis 40 projects outwards beyond the end 22 of the rail 21 when the sliding member 25 is situated near the end 22. The pivot axis 40 is then preferably situated even further outwards than the side of the vehicle. The construction makes it possible to keep the distance between the pivot axis 40 and the centre of gravity of the (laden) construction 10 short - which is advantageous for the loading of the pivot assembly - and also to ensure that the end 22 of the rail 21 lies relatively far inwards, so that end 22 of the rail 21 does not become caught up in anything or cause damage when the vehicle is being driven.

After this explanation it is already clear that the vehicle with the load carrier as shown in Figure 1 can be parked, after which the locking means, if present, for the sliding member 25 are unlocked and the sliding member 25 is slid along the rail 21 towards the end 22. The construction 10 is then swung a quarter turn about the pivot axis 40, so that the bicycles go into a position parallel to and beside the rear part of the vehicle, and the clear access position according to Figure 2 is obtained, in which position the tailgate 3 of the vehicle can be opened.

In a variant, operable locking means can be provided near the pivot assembly, which locking means block the swinging movement of the construction 10 about the pivot axis 40, so that an accidental swing, for example when the bicycles are being placed in position or being removed, is prevented.

It will be clear that in a variant the rail 21 runs towards the other corner of the vehicle, or that the rail 21 extends towards both corners. It will further be clear that the rail 21 can be composed of several rail elements, for example two tubular sections lying one above the other, between which the rollers 26 are placed.

In a variant, the towing hook 32 is of the type that comprises a towing hook part fitted immovably on the vehicle and a towing hook part with the towing ball 31 that can be fitted detachably on the first part. In that embodiment it is conceivable for the securing device 30 to be designed in such a way that the load carrier can be fixed directly to the towing hook part of the towing hook 32 fitted immovably on the vehicle, without making use of the ball 31.

It is often stipulated in the legislation that lighting must be present at the rear side of the load carrier, for example corresponding to the lighting on the rear side of the vehicle. In the case of the known load carriers said lighting can be connected by means of a cable with plug to a socket fixed near the towing hook 32 on the vehicle.

The invention provides a variant of an embodiment (not shown) in which the sliding member 25 is provided with a plug element, and a socket element that can be connected to the plug element is provided on the rail 21 and/or the attachment device 30, which socket element in turn can be connected to the electrical system of the vehicle, in such a way that the plug element and the socket element can be connected in the transport position of the load accommodation construction, preferably by automatic connection if the load accommodation construction is being taken into the transport position.

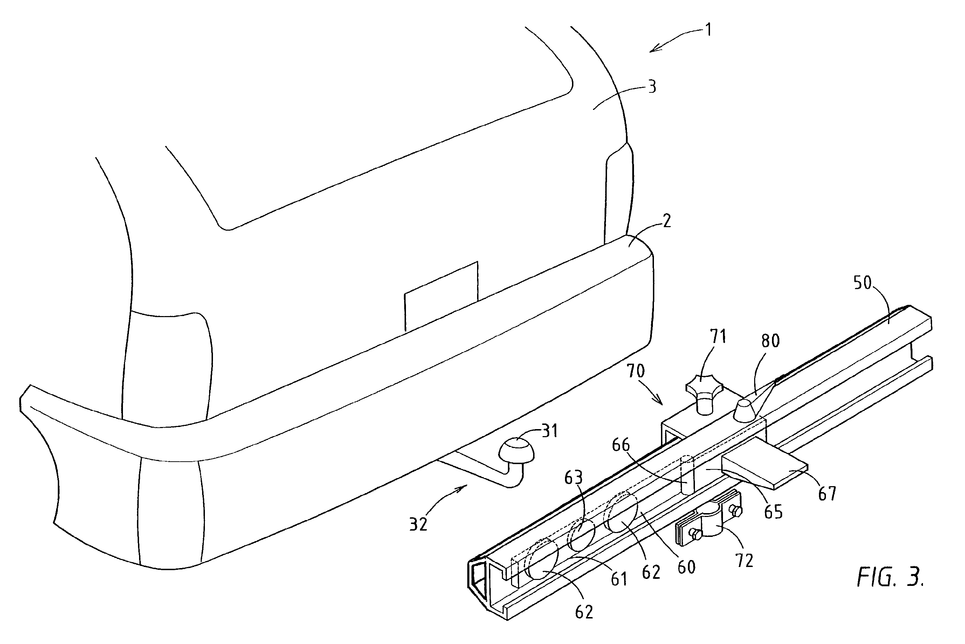

An example of an embodiment of the load carrier according to the invention, in particular its intermediate construction, will now be explained in greater detail with reference to Figure 3.

Figure 3 shows the rear side of the vehicle 1, and at a distance from it the relevant part of the load carrier.

It can be seen that there is a metal rail 50 with a substantially C-shaped cross section, in which the centre web of the rail 50 is directed vertically, the centre web being in the form of a tubular section. In this way the legs of the C-shaped rail 50 form guide grooves, situated above one another, for the top side and the bottom side of a sliding member 60 to be described in greater detail.

An attachment device 70 is fitted on the rail 50, in order to fix the rail 50 on the towing hook 32. In particular, the assembly 70 comprises a part into which the ball 31 fits, with a locking plate engaging below the ball 31 and having a keyhole opening and a locking bolt 71 that presses on the top of the ball 31. The assembly 70 further comprises a clamp 72, which below the ball is fixed around the bar of the towing hook.

The sliding member 60 comprises a guide part 61, which is provided with guide means fitting into the C-shaped cross section of the rail, in this example said guide means being rollers 62 and adjusting roller 63, which is adjustable with an eccentric.

The sliding member 60 further comprises a pivoting part 65, which is attached by way of pivot 66 to the guide part 61, and which is designed for attachment of the load accommodation construction, detachably or otherwise. In this example only projection 67, to which a load accommodation construction can be attached, can be seen.

It can be seen in Figure 3 that the pivoting part 65 of the sliding member 60 also fits in a slidable manner in the C-shaped cross section of the rail 50, in such a way that in the transport position the pivoting part 65 is situated in the rail 50, and in such a way that in the clear access position the pivoting part 65 projects beyond the rail 50, while the guide part 61 is situated near the corresponding end of the rail 50, and can be turned approximately a quarter turn relative to the rail 50.

The pivoting part 65 may, if desired, be provided with sliding parts for the sliding guidance relative to the rail 50.

In Figure 3 it can be seen that there is a rotatable crank lever 80 for operating a locking bolt, by means of which the sliding member 60 in its transport position is fixed in the rail 50.

An additional towing ball can be fitted on the projection 67, so that a known load carrier with integral towing hook attachment device can be attached to the intermediate construction shown. Said additional towing ball is preferably fitted at substantially the same height as the vehicle towing ball.

## Claims

1. Assembly of an intermediate construction adapted for attachement thereto of a load accommodation construction for a load, in particular one or more bicycles, and an attachment device for securing the intermediate construction to the rear side of a motor vehicle, in which the intermediate construction comprises a pivot assembly that forms a vertical pivot axis, all the above such that an attached load accommodation construction is movable between a transport position and a clear access position, in the transport position the load accommodation construction being situated behind the vehicle and consequently impeding or blocking access to the rear side of the vehicle, and in the clear access position the load accommodation construction being situated laterally beside the vehicle - in the vicinity of the rear side of the vehicle - in an orientation turned through an angle, for example a quarter turn, relative to the transport position, **characterized in that** the intermediate construction permits a translation of the pivot assembly along the rear side of the motor vehicle.

2. Assembly according to claim 1, in which the intermediate construction comprises a telescopic arm, having a stationary arm part which can be secured by way of the attachment device to the motor vehicle, and having a telescopic arm part which is telescopically guided relative to the stationary arm part, and which is movable back and forth substantially parallel to the rear side of the vehicle, the pivot assembly being fitted on the telescopic arm part.

3. Assembly according to claim 1, in which the intermediate construction comprises an elongated rail, and in which the attachment device is designed to secure the rail to the vehicle, such that the rail extends along the rear side of the motor vehicle until near one or both rear corners of the motor vehicle, the intermediate construction further comprising a sliding member, which is fitted such that by way of guide means it can slide back and forth on the rail.

4. Assembly according to claim 3, in which the guide means comprise one or more roller elements fitted on the sliding member, for providing a roller bearing relative to the rail, the position of one or more of the roller elements preferably being adjustable for play-free guidance of the sliding member relative to the rail.

5. Assembly according to claim 3 or 4, in which locking means are provided, for locking the position of the sliding member relative to the rail in the transport position.

6. Assembly according to one or more of claims 3 - 5, in which the sliding member is provided with a plug element, and a socket element that can be connected to the plug element is provided on the rail and/or the attachment device, which socket element in turn can be connected to the electrical system of the vehicle, in such a way that the plug element and the socket element can be connected in the transport position, preferably by automatic connection if an attached load accommodation construction is being taken into the transport position.

7. Assembly according to one or more of claims 3 - 6, in which the pivot axis is disposed in a laterally outwards staggered manner relative to the guide means of the sliding member, in such a way that the pivot axis is situated beyond the side of the vehicle, while the adjacent end of the rail is situated inwards relative to the side of the vehicle.

8. Assembly according to one or more of claims 3 - 7, in which the rail forms guide grooves, situated above one another, for the top side and the bottom side of the sliding member, the rail preferably having substantially a C-shaped cross section, with a substantially vertically disposed centre web, which is preferably in the form of a tubular section.

9. Assembly according to claim 8, in which the sliding member comprises a guide part, which is provided with guide means fitting into the C-shaped cross section of the rail, for example rollers, and in which the sliding member further comprises a pivoting part, which is attached by way of the pivot axis to the guide part and is designed for attachment of the load accommodation construction, detachably or otherwise.

10. Assembly according to claim 9, in which the pivoting part of the sliding member also fits in a slidable manner in the C-shaped cross section of the rail, in such a way that in the transport position the pivoting part is situated in the rail, and in such a way that in the clear access position the pivoting part projects beyond the rail and is turned approximately a quarter turn relative to the rail.

11. Assembly according to one or more of the preceding claims, in which a towing ball can be fitted on the intermediate construction, for example on the sliding member.

12. Load carrier designed for mounting on the rear side of a motor vehicle, which load carrier comprises:
- a load accommodation construction for accommodating a load, in particular for one or more bicycles, and
- an assembly of an intermediate construction and an attachment device according to one or more of the preceding claims.

13. Load carrier adapted for mounting on the rear side of a motor vehicle, which load carrier comprises:
- a load accommodation construction for accommodating the load, in particular for one or more bicycles, an intermediate construction, and an attachment device, in which the vehicle is provided with a vehicle towing ball and the attachment device is designed for securing the intermediate construction to the vehicle towing ball, and in which the load accommodation construction is connected by way of a pivot assembly to the intermediate construction, which pivot assembly forms a vertical pivot axis, all the above in such a way that the load accommodation construction is movable between a transport position and a clear access position, in the transport position the load accommodation construction being situated behind the vehicle and consequently impeding or blocking access to the rear side of the vehicle, and in the clear access position the load accommodation construction being situated laterally beside the vehicle - in the vicinity of the rear side of the vehicle - in an orientation turned approximately a quarter turn relative to the transport position, **characterized in that** an additional towing ball is fitted on the intermediate construction, for example on the sliding member, preferably at substantially the same height as the vehicle towing ball.

14. Load carrier adapted for mounting on the rear side of a motor vehicle, which load carrier comprises:
- a load accommodation construction for accommodating a load, in particular for one or more bicycles, an intermediate construction, and an attachment device, in which the attachment device is designed for securing the intermediate construction to the rear side of the vehicle, and in which the load accommodation construction is connected to the intermediate construction, all the above in such a way that the load accommodation construction is movable between a transport position and a clear access position, in the transport position the load accommodation construction being situated behind the vehicle and consequently impeding or blocking access to the rear side of the vehicle, **characterized in that** the load carrier is provided with a plug element, and a socket element which can be connected to the plug element, which socket element in turn can be connected to the electrical system of the vehicle, in such a way that the plug element and the socket element can be connected in the transport position of the load accommodation construction, preferably by automatic connection if the load accommodation construction is being taken into the transport position.
